Europäisches Patentamt

European Patent Office

Office européen des brevets

(11) Publication number: **0 156 580**
**B1**

(12) **EUROPEAN PATENT SPECIFICATION**

(45) Date of publication of patent specification: **24.10.90**

(51) Int. Cl.⁵: **H 04 L 12/42, H 04 L 12/40**

(21) Application number: **85301699.6**

(22) Date of filing: **12.03.85**

(54) Data transmission system.

(30) Priority: **19.03.84 US 591292**

(43) Date of publication of application:
**02.10.85 Bulletin 85/40**

(45) Publication of the grant of the patent:
**24.10.90 Bulletin 90/43**

(84) Designated Contracting States:
**FR GB IT SE**

(56) References cited:
**DE-A-3 136 524**
**US-A-4 408 300**

**IBM TECHNICAL DISCLOSURE BULLETIN, vol.
24, no. 11A, April 1982, pages 5325-5328, New
York, US; P. JANSON et al.: "Ring access control
to bus local network"**

**COMPCON FALL 80, Washington, D.C., US,
23rd-25th September 1980, pages 261-267, IEEE,
New York, US; H.S. AL-KHATIB et al.: "The
extended ethernet: EE-net" .**

(73) Proprietor: **HONEYWELL INC.**
**Honeywell Plaza**
**Minneapolis Minnesota 55408 (US)**

(72) Inventor: **Leete, Tom G.**
**1108 Longhorn Drive**
**Plano Texas 75023 (US)**

(74) Representative: **Frohwitter, Bernhard, Dipl.-Ing.
et al**
**Bardehle-Pagenberg-Dost-Altenburg & Partner
Patent- und Rechtsanwälte Galileiplatz 1
Postfach 86 06 20
8000 München 80 (DE)**

EP 0 156 580 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a transmission system, and more particularly, to a digital transmission system for transmitting packets of information on a bus between devices coupled to the bus, control information being transmitted around a separate control ring.

Data transmission systems of such category are already known in the art as described, for example, in the German Offenlegungsschrift 31 36 524. This data transmission system comprises a separate ring for the control signals and another for the information. User terminals around the rings are connected into routers which have control connections to the rings to control addressing of control signals and accessing data signals. A central station controls the sequencing, synchronisation, operation control and data access to the rings, etc. This system is operated in a time division multiplex mode. Hence, it allows only one transmission at a time. This operating modulus diminishes the data transmission effectiveness of that system.

In order to provide for a highly effective orderly exchange of information between terminals and end-user devices, various other network architectures and schemes have been devised; however, many of those other existing data transmission systems are complex, inefficient, and require large amounts of complex hardware. In addition, present systems do not provide for maximum utilization of available bandwidth. Time slots allocated during a communication sequence are essentially wasted when no data is to be transmitted during a lull or quiet period.

Hence, it is desirable to provide a data transmission system for interdevice communication which is high speed and overcomes the disadvantages and limitations of existing systems.

Accordingly, it is an object of the present invention to provide an improved data transmission system for transferring information between user terminals in a ring configuration.

Accordingly, the present invention provides a central station which is characterized in that the data bus comprises a plurality of lines one for each router controlling the transmission of data on a respective one of said lines, each router being coupled to said lines to selectively receive data therefrom; a plurality of control lines of said token ring connect each router to a next-adjacent router to form a ring of interconnected routers, said token ring control lines transmitting control message tokens from each router to said next-adjacent router as to complete a passage around said ring from a token-originating router through all other routers in sequence and returning to the originating router; each router comprising logic circuitry for controlling the exchange of data with another router by initiating the transmission of a token around said ring during a particular timing cycle to indicate the availability of such router to be a destination router for receiving data from any other one of said routers, and for modifying the token originated by another router to indicate the readiness of said router to be the source of data to bë transmitted to the originating router.

Thus, the data transmission of the subject invention is advantageous over the known system in that the data bus allows all routers to transmit data simultaneously, i.e. one serial transmission of data per line and per router, and all routers are circulating tokens or control signals at the same time. This results in a highly effective system as to the transmission rates in that, during one cycle, tokens from all of the routers are circulating and during the same cycle all routers which accepted a token during the preceding cycle are transmitting data.

A data transmission system embodying the invention will now be described, by way of example, with reference to the drawings, in which:

Figure 1 is a block diagram of the transmission system;

Figure 2 shows the overall control timing of the system;

Figure 3 shows the data format utilized by the system;

Figure 4 shows the token ring logic of each router;

Figure 5 shows the interface logic, and each router for interfacing with its respective buffer memory;

Figure 6 is a timing diagram of each router operation during the first cycle of each frame;

Figure 7 is a timing diagram of each router operation during each cycle of a frame exclusive of the first cycle; and

Figure 8 is a block diagram of the buffer memory of the system.

## Introductory summary

The data transmission system implements a communications scheme between a plurality of devices, where the system has a central station, having a plurality of input/output formatters connected to the central station, each input/output formatter having a plurality of devices coupled thereto, for exchanging data between the formatters. The central station comprises a plurality of router elements, each connected to a serial data bus having a plurality of serial data bus lines, and each of the routers is connected to the next adjacent router via a plurality of parallel lines forming a ring. Each router controls the exchange of data in response to a corresponding control message token transmitted by each of the routers via the ring during a first cycle to indicate transmission of data from a formatter on its corresponding serial data bus lines during the next sequential cycle. A plurality of buffer memory elements is included, each of which is connected to a corresponding router and a corresponding formatter. Further, each buffer memory is connected to the corresponding serial data bus line of the serial data bus, for interfacing with the corresponding router to cause data to be coupled onto and off the serial data bus in response to the token.

## Detailed description

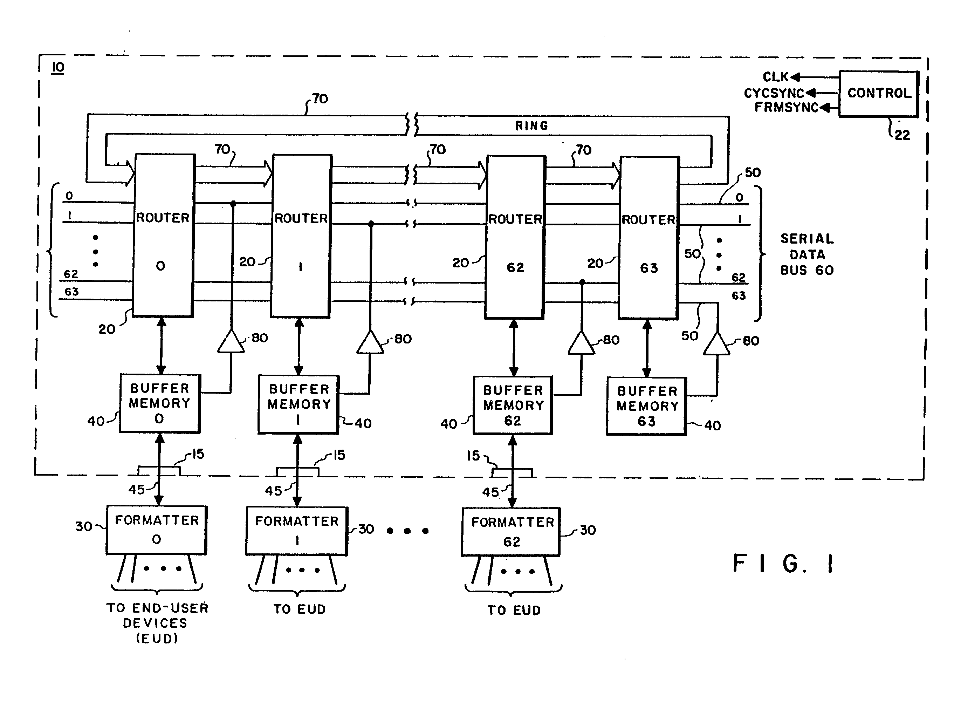

Figure 1 is a block diagram of the transmission system. A plurality of end user devices EUD's (not shown), which include such devices as telephones and terminals, are connected to formatters 30. Each formatter 30 is connected via a data link 45 to a corresponding port 15 of a central station 10, the central station 10 effectively causing data to be exchanged between two EUD's on different formatters. The control station 10 comprises a plurality of routers 20 and buffer memories 40. Each router 20 is associated with a corresponding buffer memory 40, each buffer memory 40 interfacing with the corresponding port 15 of the central station 10. Each router 20 is connected to 64 serial data bus lines 50, numbered 0 to 63, which make up the serial data bus 60. Further, each router 20 is connected to the next adjacent router 20 via a parallel line ring 70, thereby connecting all the routers 20 in a ring configuration. Each buffer memory 40 outputs serial data to a corresponding serial data bus line 50 via driver 80. A control element (CONTROL) 22 generates the clocking signals CLK and timing signals CYC SYNC and FRM SYNC which define the time frames for the information transfer of the transmission system.

Each formatter or concentrator 30 interfaces with a plurality of end user devices (not shown) such as telephones, terminals, processors, and computers. Each formatter 30 formats the data received from the end user devices attached thereto in a predetermined format for transmission to its respective router 20 via its respective buffer memory 40, and further causes data received from the buffer memory 40 to be transmitted to a specified destination end user device. The formatters 30 append a destination address to packets originating from devices not having the capability of attaching the destination addresses. The formatters 30 may take many conventional forms depending upon the data devices coupled thereto, one form including a microprocessor. Buffer memory 40 stores the data received from the formatter 30 for transmission to the router 20 during the proper time period. The buffer memory 40 will be described in detail later.

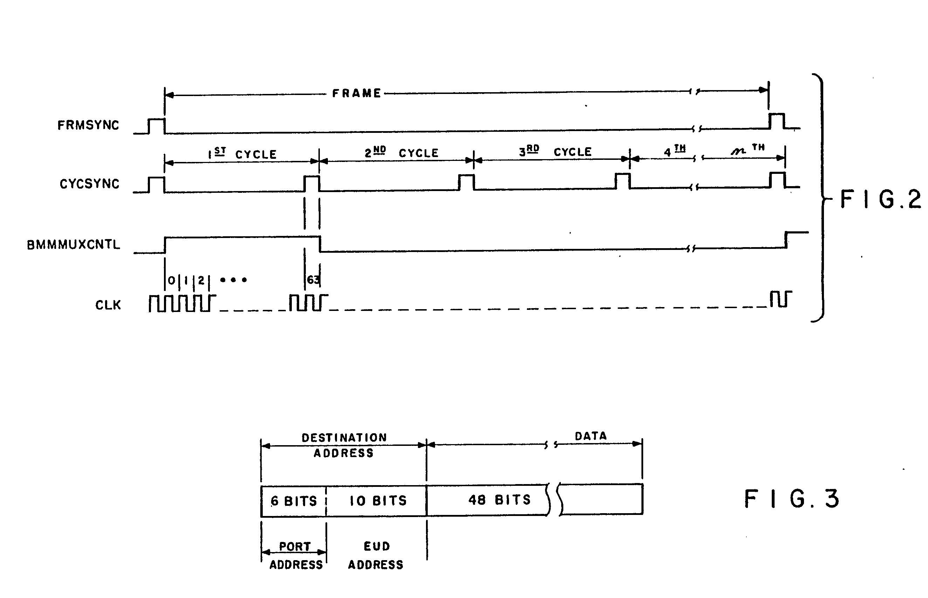

A general description of the overall operation of the data transmission system will now be discussed in conjunction with Figures 1 and 2. The transmission period of data occurs in time frames, a frame being defined as a period of time which occurs between frame pulses, FRM SYNC. Each frame is divided into N cycles, a cycle being defined by a timing signal, CYC SYNC. Each cycle is a time period of 64 clock times, i.e. contains 64 clock pulses, CLK. The first cycle of each frame is utilized by each router 20 for the initialization of the transmissions which occur during the remaining cycles of the frame. For this reason, Buffer Memory 63 has no EUD/Formatter 30 coupled thereto. A control signal BMM MUX CNTL is high as shown in Figure 2 during cycle 1 to enable initialization data to be loaded into each router 20 from the respective buffer memory 40. Each subsequent cycle of the frame is utilized to transmit a token (or control message) around the ring 70, and data is transmitted on the various serial data bus lines 50 in response to control information contained in the token. The token passes control message information between routers, indicating to the router which the token belongs to whether it is to receive data from another router of the transmission system which is a sender.

At the beginning of each cycle (exclusive of cycle one) each router outputs its own token, the contents of which indicate that the router is available to receive data. At each clock time of the cycle, the tokens are shifted to the next adjacent routers. A particular router such as router No. 33 thus receives the tokens of all the other routers in reverse cyclic sequence, i.e. the tokens of routers Nos. 32, 31, 30, . . ., 1, 0, 63, 62, . . ., 34, and finally its own token. Each router has a down counter which is initialized to 1 less than its own number (ID number) and is used to identify the number of the router which originated the token being received at any particular clock time. If a router has a message to send to the router whose token has just been received, the token contains an "available" signal, and the router has not already accepted a token during the cycle, the router inserts its ID into the token. In this manner, as the token is transferred around the ring 70 during the cycle, subsequent routers can determine whether the originating router is available to receive data or not.

At the end of the cycle, each router receives back its own token which it initially outputted. By examining the token, the router can determine if a message is to be received during the next cycle, and if so, which router is to be the sender. By decoding the ID in the token, the router can select the proper line of the serial data bus 50 corresponding to the router of the sender. In a like fashion, the buffer memory 40 of the sending router enbles its corresponding line driver 80 for outputting the data on its respective line of the serial data bus 50. The transmission of data occurs on the serial data bus 60 simultaneously with the transmission of the token around the ring 70. In 64 clock times, the token will have been transmitted around the ring 70 and received back by the initiating router 20. The data block is 64 bits. (The format of the data, shown in Figure 3, includes 16 destination address bits, 10 of which are utilized by the receiving formatter 30 in order to properly channel the data to the correct end user device, and 48 data bits.) Also, transfer of the data serially over the serial data bus line 50 utilizes 64 clock times (CLK). Hence, during one cycle a complete block of data of 64 bits is transmitted on the serial data bus line 50 simultaneously with the token being transmitted around the ring 70.

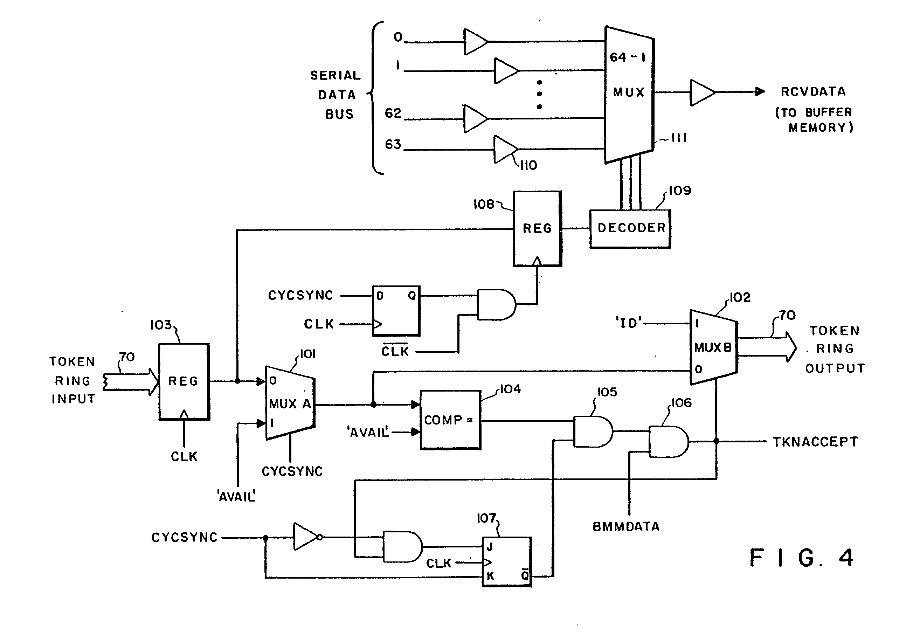

Figure 4 is a block diagram of a router 20, showing the token (or token ring) logic of the router. A token consists of 6 bits. At the beginning of each cycle, the token is outputted as an "available" signal "AVAIL" consisting of 6 logic 1's, the parallel ring 70 having 6 lines. At the beginning of each cycle, the available token "AVAIL" of each router 20 is outputted from MUX A 101 to MUX B 102. The output of MUX B 102 is the token ring output 70. Since BMM DATA is low during the first clock time of each cycle, TKN ACCEPT will be a logic 0. Thus, the 0 side of MUX B 102 is selected, thereby allowing the available token "AVAIL" to be outputted onto the ring 70. The generation of BMM DATA will be described later.

On each subsequent clock time of the cycle, the token outputted via token ring output 70 from the preceding router in the ring is received by the router on the token ring input 70 and clocked into register 103. The token temporarily stored in register 103 is coupled to comparator COMP 104 to determine if the token is an "available" signal. If the token is available and no other token has been accepted from any previous router 20 examining the token, AND gate 105 is enabled, partially enabling AND gate 106. If data is to be transmitted to the router which transmitted the token currently being held in register 103, BMM DATA will be high thereby accepting the token, the TKN ACCEPT signal going high (a logic 1), setting flip-flop 107 and selecting the 1 output of MUX B 102. The token outputted from MUX B 102 is then modified to be the ID of the router which will transmit, each router having a unique ID (the routers are numbered 0—63 and the ID's correspond to these numbers). On the next clock the token as modified will be passed to the next adjacent router 20. During the rest of the cycle as that particular token is passed around ring 70, the comparator 104 of each of the following routers in the ring 70 will not signal a match and hence no other router can accept that token.

After 64 clock times each token will have been transmitted around the entire ring. Each router will have the token, modified or unmodified, it initiated stored in its respective register 103. At this time register 108 is clocked to receive the token stored in register 103. If the token is still all 1's, then no other router in the central station 10 accepted the token, i.e. no other router has data to transmit to that router. Decoder 109 will then select serial data bus line 63 and receives dummy data from router 63. If the token contains anything but the available token, the token indicates the ID of the router desiring to transmit to that router. Therefore, decoder 109 will select that one of the serial data bus lines 50 via 64-1 MUX 111 corresponding to the ID in the token. The router which modified the token transmits data serially at the start of the next cycle on its respective serial data bus line via driver 80 and the data is received by the receiving router 20.

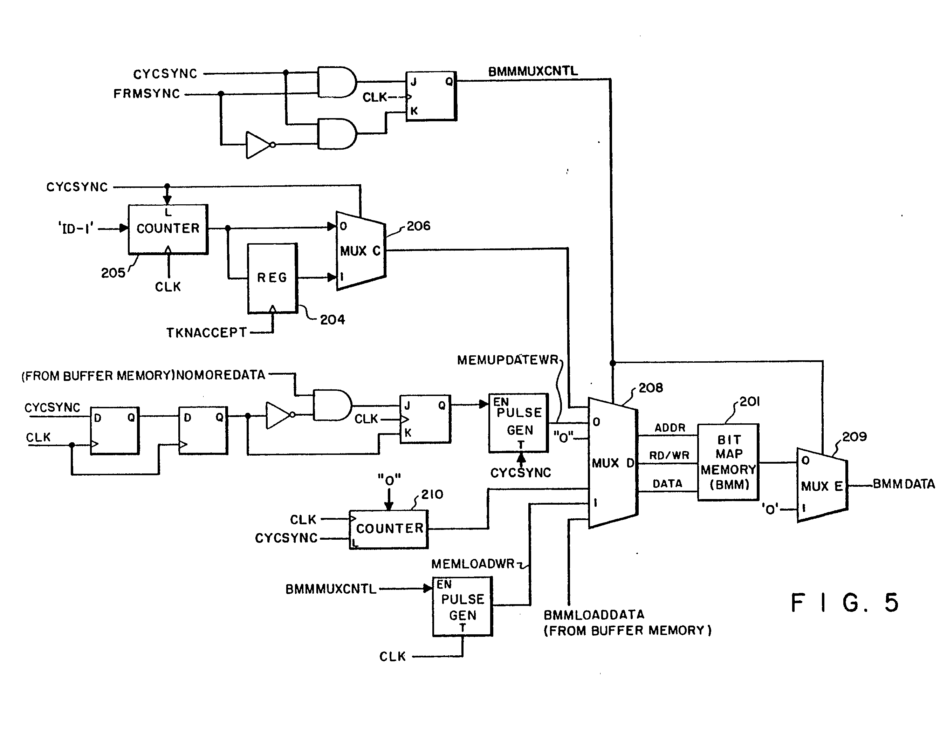

The interface logic of each router which interfaces with the buffer memory 40 shown in Figure 5. A 64×1 bit map memory (BMM) 201 contains a flag bit for each router indicating if data is currently stored in the buffer memory 40 for each of the routers. The BMM 201 is organized such that location 0 contains a flag for router 0, location 1 contains a flag for router 1, etc, a logic 1 indicating that data is currently stored in the buffer memory 40 for the designated router. Down counter 205 keeps track of which router which initially transmitted the token currently being examined by the token logic; more specifically, it identifies the token currently latched in register 103 of the token logic.

At the beginning of each cycle, down counter 205 is initially loaded with a value of "ID−1". As a token is transmitted into the register 103 on the token ring input 70 each clock time, the value in the down counter 205 is also decremented by 1 each clock time, thereby allowing the logic to identify the router whose token is currently latched in register 103. The value currently being stored in down counter 205 is coupled to the address lines of BMM 201 via MUX C 206 and MUX D 208. The flag bit stored in the BMM 201 is read and coupled onto the BMM DATA line via MUX E 209. BMM DATA is coupled to AND gate 106 of the token logic, indicating whether data is or is not available to be transmitted. If a control signal NO MORE DATA is received from buffer memory 40, indicating that no more data is available for the router selected for transmission during the previous cycle, a write signal MEM UPDATE WR is generated at the beginning of the cycle, setting to 0 the flag bit located in bit map memory 201 corresponding to the router identified in register 204. During the first cycle of every frame, signal BMM MUX CNTL goes high, selecting the 1 input of MUX D 208. BMM LOAD DATA, which is the data for the bit map memory 201 from buffer memory 40, is then loaded into the bit map memory 201. The updated BMM data indicates which routers are desired to be transmitted to by the router during the new frame.

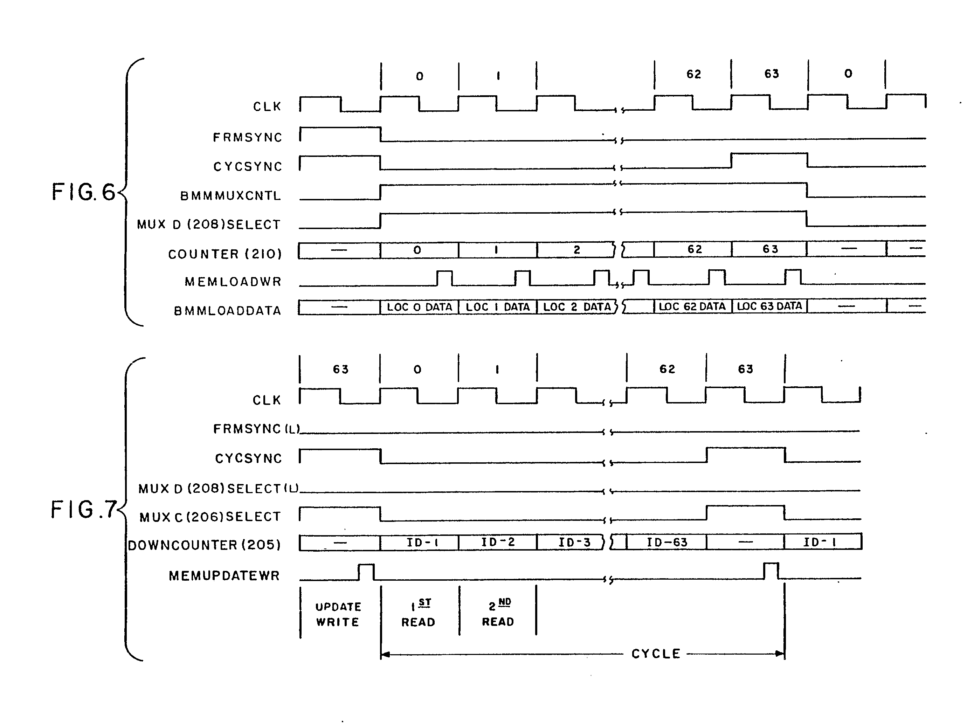

Figure 6 is a timing diagram of each router operation during the first cycle of each frame. The clocking signal CLK is shown along with the respective clock times 0—63, and also shown are the timing signals FRM SYNC and CYC SYNC. As mentioned above, signal BMM MUX CNTL, which controls MUX D 208 and MUX E 209, is high during the first cycle of each frame. Counter 210 is initialized to 0 during the beginning of the first cycle of each frame and is incremented thereafter by each clock signal CLK. The contents of counter 210 generate the addresses for BMM 201 and are utilized to load the flag data from buffer memory 40. The write signal MEM LOAD WR is generated each clock time during the first cycle of each frame, thereby allowing the corresponding BMM LOAD DATA to be written into the bit map memory 201.

Figure 7 is a timing diagram of each router operation during each cycle except for the first cycle. The clocking signal CLK is shown along with the clock times 0 to 63, and the timing signals FRM SYNC and CYC SYNC. As mentioned above, signal BMM MUX CNTL is low during the subsequent cycles of a frame, thereby allowing the bit map memory 201 to be read for the generation of the proper BMM DATA signal. Although the memory update write signal MEM UPDATE WR is present, this is only the case when no more data is available. When the NO MORE DATA signal is present, a bit map memory write signal is generated during clock time 63. The write is performed to the memory location of the bit map memory 201 designated by the address stored in register 204. This is accomplished by MUX C (206) select being high during the memory update write cycle. As mentioned above, at the beginning of the cycle down counter 205 is initialized to ID−1 and is decremented each subsequent clock time of the cycle.

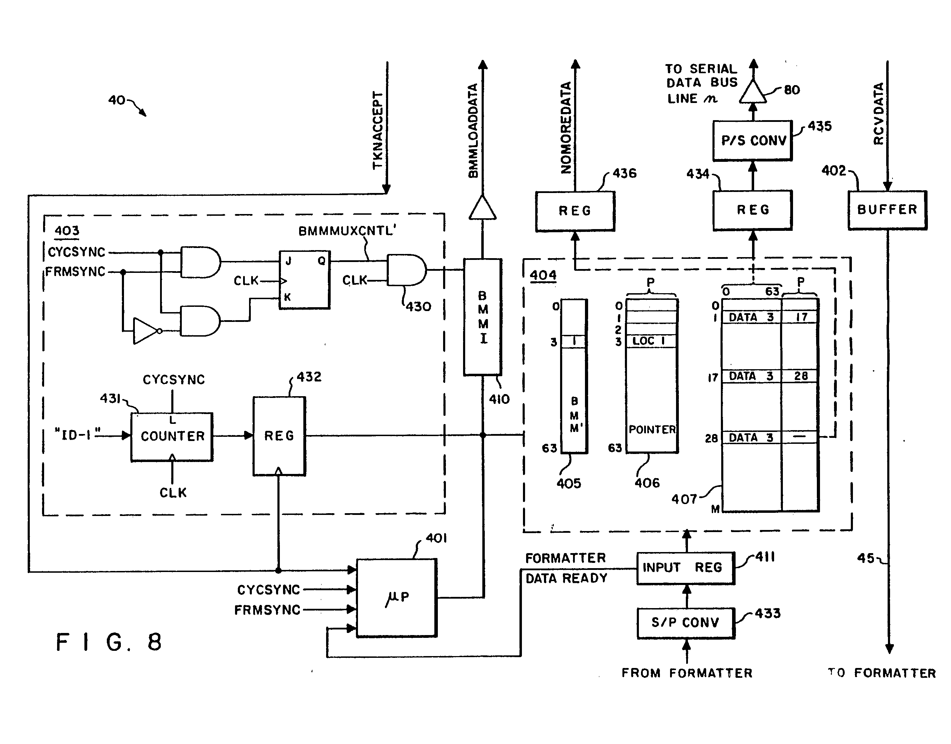

Figure 8 is a block diagram of the buffer memory 40. The buffer memory 40 is controlled by a microprocessor 401, which is connected to router interface logic 403, a FIFO memory (BMMI) 410, data memory 404, and input register 411. A number of interrupts are supplied to the microprocessor 401 thereby providing the necessary timing and status inputs, including signals TKN ACCEPT, CYC SYNC, FRM SYNC, and FORMATTER DATA READY. Data received from the router 20 via the RCV DATA line is temporarily held in a buffer 402 for subsequent transmission to the formatter 30 via data line 45. The router interface logic 403 contains the logic for generating BMM MUX CNTL', a copy of the BMM MUX CNTL signal described above in conjunction with the router interface logic of Figure 5. BMM MUX CNTL' is used to gate 64 clock pulses through AND gate 430 to clock data out of BMMI 410, the data comprising the bit map memory data loaded in BMM 201. Register 432 latches an ID value received from down counter 431, identifying which router to send data to during the next cycle. Data received from formatter 30 is converted from serial to parallel by S/P CONV 433 and stored in data memory 404 via input register 411 under control of microprocessor 401 in conjunction with the control signal FORMATTER DATA READY. The data memory 404 is formatted to include a double buffered version of a BMM' 405, a pointer memory 406, and a data/link memory 407. The BMM' 405 is a 64×1 memory area which supplies the data for the bit memory map 201 to BMMI 410 prior to the transmission of the data to the router 20. The pointer memory 406 is a 64×p memory, the width sufficient to identify the addresses of the data/link memory 407. The data/link memory 407 is a (64+p)×M memory, 64 bits containing the data and p bits containing a link pointer. The length of data/link memory 407 is M words and determines the number of cycles N in a frame. The length M is a design choice as a function of the type of data and the data rates of the EUD's and the amount of traffic to be handled by the central station 10. Register 434 and P/S CONV 435 form the parallel to serial converter logic to drive data in a serial fashion on to the serial data bus line 50 associated with the buffer memory 40/router 20 pair. Register 436 is a general purpose output register for driving the NO MORE DATA signal.

The operation of the buffer memory 40 will now be described. The buffer memory 40 operates in essentially two phases, the loading and the unloading phase. Although both phases occur simultaneosuly, the two phases operate independently. The loading phase encompasses the collection of one frame of data from the formatter 30 and loading of the data into the data memory 404. Data received from formatter 30 is converted into parallel form by S/P CONV 433 and latched into input register 411, generating the control signal FORMATTER DATA READY to the microprocessor 401 indicating the presence of data. Each quantum of data read from input register 411 is loaded into the data/link memory 407 in link list form. Data for the BMM' 405 is also constructed which when completed will indicate the presence or absence of data for a given router as determined by the destination address associated with the data. The BMM' 405 data is loaded into BMMI 410 prior to the end of the loading phase. All of the areas of data memory 404 are double buffered. While the loading phase constructs the link lists and BMM data for the next frame in a first memory area of data memory 404, the unloading phase is using the link list and BMM generated during the previous frame in a second memory area of data memory 404.

For illustrative purposes only, assume the down counter in router interface logic 403 contains a value of 3 when the TKN ACCEPT signal is received. This signifies that data is to be transmitted to router No. 3. A shown in BMM' 405, location 3, which corresponds to data for router No. 3, is a 1. The corresponding pointer memory 406 indicates that data for router No. 3 is stored in location 1 of the data/link memory 407. On the subsequent cycle location 1 is fetched and the data (denoted as DATA 3) stored therein is for router No. 3 and is outputted to the serial data bus line n which corresponds to the transmitting router. The pointer indicates more data for router No. 3 is stored in location 17. The pointer memory 406 is then updated to indicate location 17. Hence, on subsequent cycles of the frame when the router accepts the token for router No. 3, data is then fetched from data/link memory 407 from location 17. In the same fashion more data for router No. 3 is stored in this example in location 28 and pointer memory 406 is then updated to contain the value of 28. On subsequent cycles of the frame when the token for router No. 3 is again accepted, location 28 is fetched for data 3 and outputted to the serial data bus line n. However, in this case the link pointer indicates no more data is available and hence the NO MORE DATA signal is outputted to the router. In addition, location 3 in the BMM' 405 is set to 0, indicating no more data is available for router No. 3 during this frame.

In the present system, data memory 404 is double buffered. That is, a duplicate of buffer memory 404 is interfacing with the router during a first frame while the other data memory 404' is interfacing with the formatter (i.e., is being loaded from the formatter). On the subsequent frame the data memory 404' which has just been loaded from the formatter is now interfacing with the corresponding router 20 while the data memory which has transmitted all the data stored in data/link memory 407 is now interfacing with formatter 30. This is accomplished under the control of microprocessor 401.

It will be realized that the present system differs from most token passing systems in that in the present system, there are as many tokens as there are routers in the system. In most systems, there is a single token which gets passed between the units—equivalent to the present routers—in the system. Also, in most systems there is also a single data channel which all units in the system may use at different times. In the present system, the data channel consists of as many separate lines as there are units or routers. In standard systems, the data channel is often a parallel channel, so that the data rate is reasonably high; in the present system, the data channels or lines are, in the preferred embodiment, single serial lines, since the presence of as many such lines as there are units means that the system data rate can be high. It is however possible, of course, for each individual line in the bus 60 to be a parallel line.

The present system can also be regarded as a form of cross-bar switch or matrix switch. The rows of the matrix are formed by the lines of the serial bus 60, and the buffer memories 40 control the putting of data onto these lines. The columns are formed by the decoders 109 and multiplexers 111 in the routers; each decoder and multiplexer is equivalent to a set of switches which can connect any selected one of the lines of the bus 60 to the RCV DATA line of the respective router. Viewed in this way, the token ring 70 and associated circuitry is an elaborate and efficient system for selecting the appropriate inputs to and outputs from the matrix of switches.

## Claims

1. A central station (10) for providing for the transmission of data between a plurality of end-user devices (EUD), said end-user devices (EUD) being coupled to said central station (10), comprising a plurality of routers (20) each coupled to at least one or a group of said end-user devices (EUD) to transmit data thereto and receive data therefrom, said routers (20) being connected to a data bus (50) and a token ring (70), said central station being characterized in that

the data bus (60) comprises a plurality of lines (50) one for each router (20) controlling the transmission of data on a respective one of said lines (50), each router (20) being coupled to said lines (50) to selectively receive data therefrom;

a plurality of control lines of said token ring (70) connect each router (20) to a next-adjacent router to form a ring of interconnected routers, said token ring control lines transmitting control message tokens from each router to said next-adjacent router as to complete a passage around said ring (70) from a token-originating router through all other routers in sequence and returning to the originating router;

each router (20) comprising logic circuitry (101, 102, 103)

(a) for controlling the exchange of data with another router by initiating the transmission of a token around said ring (70) during a particular timing cycle to indicate the availability of such router to be a destination router for receiving data from any other one of said routers, and

(b) for modifying the token originated by another router to indicate the readiness of said router to be the source of data to be transmitted to the originating router.

2. The central station of claim 1, characterized in that each router (20) which modifies said token causes the transmission of data on the respective data bus line (50) during the next-following cycle.

3. The central station of claim 1, characterized in that each router (20) comprises further circuit means (108, 109, 111) which upon receiving a returning token which has been modified, selectively couple a receiving circuit (402) to the data bus line (50) corresponding to the router (20) which modified the token.

4. The central station of claim 1 with a plurality of input/output formatters (30) each connecting at least one or a group of said end-user devices (EUD) to said central station (10), characterized in that each router (20) is connected via a buffer memory (40) to its associated formatter (30), said buffer memory (40) being provided for transferring data to the corresponding data bus line (50).

5. The central station of claim 4 each router (20) of which comprising

(a) interface means (201—210) for co-ordinating the data exchange with the buffer memory (40) in response to the control message token by identifying the router (20) initiating the control message token, indicating which of router data is available, with

(b) a multiplexer (208) which upon receipt of a control signal from buffer memory (40) indicating that no more data is available for the router selected for transmission, updates the router indicating data to indicate which routers are desired next to be transmitted to by said router (20).

6. A central station according to claim 5, characterized in that each buffer memory (40) comprises:

(a) data memory means (404) for storing data received from the formatter (30) in a linked list format;

(b) first buffer means (411) for temporarily holding data received from the formatter (30);

(c) a processor (401) for controlling the transfer of data into and out of the data memory means (404) in response to at least one control signal (TKNACCEPT); and

(d) router interface logic means (432) for identifying the router (20) which is to receive data during the next cycle.

7. A central station according to claim 6, characterized in that each buffer memory (40) further comprises storage means (410) for storing information to indicate which router data is available, said information being provided at the beginning of each frame whereby each frame comprises a predetermined number of cycles.

8. A central station according to claim 7, characterized in that each buffer memory (40) further comprises second buffer means (402) for temporarily storing data received from a first formatter to transmit said data to the corresponding formatter.

**Patentansprüche**

1. Zentralstation (10) zum Bereitstellen der Übertragung von Daten zwischen einer Vielzahl von Endbenutzer-Geräten (EUD), wobei die Endbenutzer-Geräte (EUD) mit der Zentralstation (10) gekoppelt sind, mit einer Vielzahl von Leitwerken (20), die jeweils mit wenigstens einem oder einer Gruppe von Endbenutzer-Geräten (EUD) gekoppelt sind, um Daten dorthin zu übertragen und Daten von dort zu empfangen, wobei die Leitwerke (20) mit einem Datenbus (50) und einem Token-Ring (70) verbunden sind, wobei die Zentralstation dadurch gekennzeichnet ist, daß

der Datenbus (60) eine Vielzahl von Leitungen (50) aufweist, jeweils eine für jedes Leitwerk (20), welche die Übertragung der Daten auf eine jeweilige der Leitungen (50) steuern, wobei jedes Leitwerk (20) mit den Leitungen (50) gekoppelt ist, um selektiv von dort Daten zu empfangen, daß

eine Vielzahl von Steuerleitungen des Token-Rings (70) jedes Leitwerk (20) mit einem nächstbenachbarten Leitwerk verbinden, um einen Ring von untereinander verbundenen Leitwerken zu bilden, wobei die Token-Ring-Steuerleitungen Steuermitteilungs-Token von jedem Leitwerk zu dem nächstbenachbarten Leitwerk senden, um einen Laufweg um den Ring (70) herum von einem Token-ursprünglichen Leitwerk durch alle anderen Leitwerke in der Sequenz zu vollenden und zu dem ursprünglichen Leitwerk zurückzukehren;

wobei jedes Leitwerk (20) Logikschaltungen (101, 102, 103) aufweist,

(a) um den Austausch von Daten mit einem anderen Leitwerk dadurch zu steuern, daß die Übertragung eines Tokens um den Ring (70) herum während eines bestimmten Zeitgabe-Zyklus begonnen wird, um die Verfügbarkeit dieses Leitwerks als Ziel-Leitwerk anzuzeigen, welches Daten von einem anderen der Leitwerke empfängt, und

(b) um den von einem anderen Leitwerk stammenden Token zu modifizieren, um die Bereitschaft des Leitwerks anzuzeigen, die Quelle von auf das ursprüngliche Leitwerk zu übertragenden Daten zu sein.

2. Zentralstation nach Anspruch 1, dadurch gekennzeichnet, daß jedes Leitwerk (20), welches den Token modifiziert, die Übertragung von Daten auf der jeweiligen Datenbus-Leitung (50) während des nächstfolgenden Zyklus veranlaßt.

3. Zentralstation nach Anspruch 1, dadurch gekennzeichnet, daß jedes Leitwerk (20) weitere Schaltungseinrichtungen (108, 109, 111) aufweist, die beim Empfangen eines zurückkehrenden Token, der modifiziert wurde, selektiv eine Empfangsschaltung (402) mit der Datenbus-Leitung (50) entsprechend dem Leitwerk (20) koppeln, welches den Token modifiziert hat.

4. Zentralstation nach Anspruch 1, mit einer Vielzahl von Eingabe/Ausgabe-Formatieren (30), die jeweils wenigstens eine oder eine Gruppe von Endbenutzer-Geräten (EUD) mit der Zentralstation (10) verbinden, dadurch gekennzeichnet, daß jedes Leitwerk (20) über einen Pufferspeicher (40) mit seinem zugeordneten Formatierer (30) verbunden ist, wobei der Pufferspeicher (40) zum Übertragen von Daten auf die entsprechende Datenbus-Leitung (50) vorgesehen ist.

5. Zentralstation nach Anspruch 4, von der jedes Leitwerk (20) aufweist:

(a) Schnittstellen-Einrichtungen (201—210) zum Koordinieren des Datenaustausches mit dem Pufferspeicher (40) in Reaktion auf den Steuermitteilungs-Token durch Identifizieren des Leitwerks (20), welches den Steuermitteilungs-Token begonnen hat, Anzeigen, welche der Leitwerks-Daten verfügbar sind, mit

(b) einem Multiplexer (208), der bei Empfang eines Steuersignals von dem Pufferspeicher (40), welcher anzeigt, daß keine weiteren Daten für das zur Übertragung ausgewählte Leitwerk verfügbar sind, die Leitwerk-Anzeigedaten auffrischt, um anzuzeigen, welche Leitwerke als nächstes zur Übertragung durch das Leitwerk (20) gewünscht werden.

6. Zentralstation nach Anspruch 5, dadurch gekennzeichnet, daß jeder Pufferspeicher (40) aufweist:

(a) Daten-Speichereinrichtungen (404) zum Speichern von Daten, die von den Formatieren (30) in einem verbundenen Listenformat empfangen wurden;

(b) erste Puffereinrichtungen (411) zum temporären Halten der von den Formatieren (30) empfangenen Daten;

(c) einen Prozessor (401) zum Steuern der Übertragung von Daten in und aus der Daten-Speichereinrichtung (404) in Reaktion auf wenigstens ein Steuersignal (TKNACCEPT); und

(d) eine Leitwerk-Schnittstellen-Logikeinrichtung (432) zum Identifizieren des Leitwerks (20), welches Daten während des nächsten Zyklus empfangen soll.

7. Zentralstation nach Anspruch 6, dadurch gekennzeichnet, daß jeder Pufferspeicher (40) ferner aufweist eine Speichereinrichtung (410) zum Speichern von Information, um anzuzeigen, welche Leitwerk-Daten verfügbar sind, wobei die Information zu Beginn jedes Rahmens geliefert wird, wobei jeder Rahmen eine vorbestimmte Anzahl von Zyklen aufweist.

8. Zentralstation nach Anspruch 7, dadurch gekennzeichnet, daß jeder Pufferspeicher (40) ferner aufweist eine zweite Puffereinrichtung (402) zum temporären Speichern von Daten, die von einem ersten Formatierer empfangen wurden, um diese Daten für den entsprechenden Formatierer zu senden.

**Revendications**

1. Poste central (10) pour pourvoir à la transmission de données entre une pluralité de périphériques d'utilisateurs finals (EUD), lesdits périphériques d'utilisateurs finals (EUD) étant couplés audit poste central (10), comportant une pluralité d'unités d'acheminement (20) couplées chacune à au moins un ou à un groupe desdits périphériques d'utilisateurs finals (EUD), pour y transmettre des données et pour recevoir des données de ces derniers, lesdites unités d'acheminement (20) étant connectées à un bus de données (50) et à un anneau à jeton (70), ledit poste central étant caractérisé en ce que:

le bus de données (60) comporte une pluralité de lignes (50), une pour chaque unité d'acheminement (20), commandant la transmission de données sur une ligne respective desdites lignes (50), chaque unité d'acheminement (20) étant couplée auxdites lignes (50) pour recevoir sélectivement des données de ces dernières;

une pluralité de lignes de commande dudit anneau à jeton (70) connecte chaque unité d'acheminement (20) à une unité d'acheminement (20) suivant immédiatement pour former un anneau d'unités d'acheminement interconnectées, lesdites lignes de commande de l'anneau à jeton transmettant des jetons à message de commande à partir de chaque unité d'acheminement jusqu'à ladite unité d'acheminement suivant immédiatement, de façon à accomplir un passage autour dudit anneau (70) à partir d'une unité d'acheminement d'origine de jeton, à travers toutes les autres unités d'acheminement en séquence et retour à l'unité d'acheminement d'origine;

chaque unité d'acheminement (20) comporte des éléments de circuit logique (101, 102, 103)

(a) pour commander l'échange de données avec une autre unité d'acheminement en initialisant la transmission d'un jeton autour dudit anneau (70) pendant un cycle de synchronisation particulier, pour indiquer la disponibilité d'une telle unité d'acheminement à être une unité d'acheminement de destination pour recevoir des données à partir de n'importe quelle autre desdites unités d'acheminement, et

(b) pour modifier le jeton émanant à l'origine d'une autre unité d'acheminement, pour indiquer que ladite unité d'acheminement est prête à être la source de données à transmettre à l'unité d'acheminement d'origine.

2. Poste central de la revendication 1, caractérisé en ce que chaque unité d'acheminement (20) qui modifie ledit jeton cause la transmission de données sur la ligne respective (50) du bus de données pendant le cycle suivant immédiatement.

3. Poste central de la revendication 1, caractérisé en ce que chaque unité d'acheminement (20) comporte des moyens de circuit supplémentaires (108, 109, 11) qui, lorsqu'ils reçoivent un jeton de retour qui a été modifié, couplent sélectivement un circuit récepteur (402) à la ligne (50) du bus de données correspondant à l'unité d'acheminement (20) qui a modifié le jeton.

4. Poste central de la revendication 1 avec une pluralité de formateurs d'entrée/sortie (30), chacun connectant au moins un ou un groupe desdits périphériques d'utilisateurs finals (EUD) audit poste central (10), caractérisé en ce que chaque unité d'acheminement (20) est connectée via une mémoire tampon (40) à son formateur associé (30), ladite mémoire tampon (40) étant fournie pour transférer des données à la ligne correspondante (50) du bus de données.

5. Poste central de la revendication 4, dont chaque unité d'acheminement (20) comporte:

(a) des moyens d'interface (201—210) pour coordonner l'échange de données avec la mémoire tampon (40) en réponse au jeton à message de commande, par identification de l'unité d'acheminement (20) initialisant le jeton à message de commande, indiquant quelles données d'unité d'acheminement sont disponibles, avec

(b) un multiplexeur (208) qui, à la réception d'un signal de commande en provenance de la mémoire tampon (40) indiquant que plus d'autres données ne sont disponibles pour l'unité d'acheminement sélectionnée pour la transmission, met à jour l'unité d'acheminement indiquant des données, pour indiquer à quelles unités d'acheminement ladite unité d'acheminement (20) désire transmettre ensuite.

6. Poste central selon la revendication 5, caractérisé en ce que chaque mémoire tampon (40) comporte:

(a) des moyens de mémoire de données (404) pour stocker des données reçues en provenance du formateur (30) en un format de liste de liaison;

(b) des premiers moyens de tampon (411) pour maintenir temporairement des données reçues en provenance du formateur (30);

(c) un processeur (401) pour commander le transfert de données dans les et en dehors des moyens de mémoire de données (404), en réponse à au moins un signal de commande (TKNACCEPT); et

(d) des moyens logiques d'interface d'unité d'acheminement (432), pour identifier l'unité d'acheminement (20) qui va recevoir des données pendant le cycle suivant.

7. Poste central selon la revendication 6, caractérisé en ce que chaque mémoire tampon (40) comporte de plus des moyens de stockage (410) pour stocker des informations, pour indiquer quelles données d'unité d'acheminement sont disponibles, lesdites informations étant fournies au début de chaque trame et où chaque trame comporte un nombre prédéterminé de cycles.

8. Poste central selon la revendication 7, caractérisé en ce que chaque mémoire tampon (40) comporte de plus des deuxièmes moyens de tampon (402) pour stocker temporairement des données reçues en provenance d'un premier formateur, pour transmettre lesdites données au formateur correspondant.

EP 0 156 580 B1

F I G. I

EP 0 156 580 B1

FRAME

FRMSYNC

1ST CYCLE   2ND CYCLE   3RD CYCLE   4TH   mTH

CYCSYNC

BMMMUXCNTL

0 1 2 ••• 63

CLK

F I G. 2

DESTINATION ADDRESS                DATA

| 6 BITS | IO BITS | 48 BITS | |
|---|---|---|---|

PORT ADDRESS   EUD ADDRESS

F I G. 3

F I G. 4

F I G. 5

EP 0 156 580 B1

FIG.6

FIG.7

EP 0 156 580 B1

FIG. 8